# EUROPEAN PATENT APPLICATION

(11) **EP 1 223 737 A1**
(43) Date of publication of application: **17.07.2002**
(21) Application number: 01300293.6
(22) Date of filing: 15.01.2001
(51) Int. Cl.: H04M 17/00, H04Q 7/38, H04Q 3/00

(54) **Providing prepaid service to a GPRS mobile station when roaming**

(71) Applicant: LUCENT TECHNOLOGIES INC., Murray Hill, New Jersey 07974-0636 (US)
(72) Inventor: Casati, Alessio, Wootton Bassett, Wiltshire SN4 7SH (GB); Grech, Michel, Pewsey, Wiltshire SN9 5AZ (GB)
(74) Representative: Buckley, Christopher Simon Thirsk

(57) **Abstract**

A GPRS telecommunications system, comprising a plurality of networks, at least one of the networks being a home network for a subscriber associated with a mobile terminal; a node (1) maintaining data relating to a service; one or more gateway nodes (3,4) in networks other than the home networks and operated by the home network service provider, and means for enabling said gateway nodes (3,4) to interact with the service data maintaining node (1) to provide them with data and/or instructions concerning the service, said service relating for example to a prepaid service.

## Description

### Field of the Invention

This invention relates to mobile data networks. In particular, it relates to mobile networks in which at least some users operate, for example, on a prepaid basis in which data transmission is paid for in advance. In particular, the invention relates to networks where a user is a prepaid subscriber to one particular network but is allowed to roam to other visited networks.

### Background to the Invention

Current standards solutions for prepaid subscribers who are roaming outside their own home network are based upon a protocol known as CAMEL (Customised Applications for Mobile Enhanced Logic), typically CAMEL phase 3 for the GPRS (General Packet Radio System) environment. The control of the prepaid subscription features is between a Serving GPRS Support Node (SGSN) and the CAMEL Service Environment (CSE). In order to allow subscribers the ability to roam, the visited network must be able to support the same level of CAMEL that is, CAMEL phase 3. The practical result of this is that in order to allow prepaid subscribers the ability to roam in any network, all visited networks must support the CAMEL phase 3 protocol.

The CAMEL protocol has not yet been déployed by all operators and is considered to be quite cumbersome to deploy. Accordingly, it may be some considerable time, if at all, before all operators deploy CAMEL. In the meantime, there is a requirement for some operators to deploy prepaid capability and to allow roaming without waiting for other operators to deploy CAMEL.

The present invention arose in an attempt to provide a mobile network that allows roaming subscribers the ability to use a prepaid service while in a visited network, and which does not rely on all participating networks deploying CAMEL.

### Brief Summary of the Invention

According to the present invention in a first aspect there is provided a method of enabling a mobile station, associated with a home network, to roam in one or more further networks while using a predetermined service, comprising; providing a node maintaining data relating to said service; providing a set of gateway nodes in the further network which are operated by the home network service provider, and causing the node to interact with the gateway nodes to provide them with data and/or instructions concerning the service.

Preferably, the service relates to the prepaid status of a subscriber.

According to the present invention in a second aspect there is provided a GPRS telecommunications system, comprising a plurality of networks, at least one of the networks being a home network for a subscriber associated with a mobile terminal; a node maintaining data relating to a service; one or more gateway nodes in networks other than the home networks and operated by the home network service provider, and means for enabling said gateway nodes to interact with the service data maintaining node to provide them with data and/or instructions concerning the service.

In a GPRS environment, the set of gateway nodes are preferably gateway GPRS support nodes (GGSNs) in the network, operated by the home service provider (home network). The additional node, which will hereinafter be referred to as the prepaid data server, but which may of course relate to services other than prepaid, may then be arranged to interact with service logic in a CAMEL Service Environment (CSE) and the GGSN, in order to provide the GGSN with thresholds based on formulae that set a limit on the amount of data that can be exchanged at a mobile station and an external network, and/or setting the maximum connection time which a session may last.

In a further aspect there is provided, in a GPRS Telecommunications System, the provision of a prepaid data server node.

### Description of the Drawings

Embodiments of the invention will now be described, by way of example only, with reference to the accompanying drawings, in which:
Figure 1 shows schematically a network architecture;
Figure 2 shows a signal flow for user established PDP context with charging characteristics indicating the prepaid user;
Figure 3 shows a signal flow for a prepaid user established PDP context when no information is available to a GGSN about charging characteristics;
Figure 4 shows a signal flow for a post-paid user established PDP context when no information is available to the GGSN about charging characteristics;
Figure 5 shows a signal flow when a GGSN reaches a threshold for a particular PDP and the PDP replies with another threshold; and
Figure 6 shows a signal flow when a GGSN reaches a threshold for a particular PDP, a user has insufficient credit remaining and the PDP requests release of the PDP context.

### Description of Preferred Embodiments of the Invention

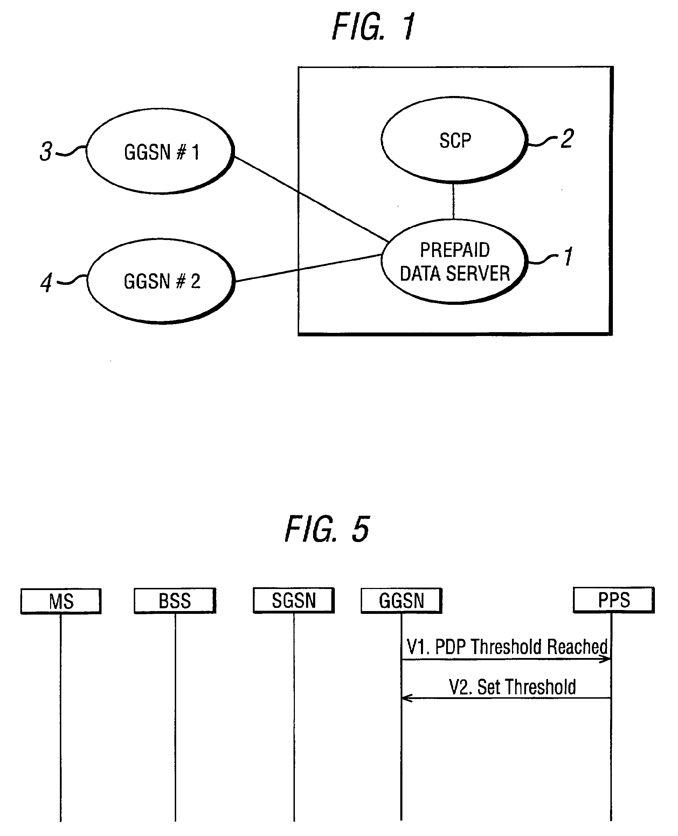

Referring to Figure 1, this figure shows very generally a network level architecture.

As described in embodiments of the invention, an additional node, which is in this specification termed the "prepaid data server" 1, is used and this maintains information about all prepaid subscribers in the network.

The prepaid data server 1 is shown as being associated with, or connected to, a service control point (SCP) 2. In the CAMEL environment this SCP 2 may be termed the CAMEL service environment (CSE). Note that the prepaid data server may be physically part of the SCP server, or it may be a separate entity which is associated with it or at least able to access it.

A plurality of GGSNs, operated by the home network, but located at other (roaming) networks, are then able to access the prepaid data server. In the figure, two of these are shown, GGSN No. 1(3) and GGSN No. 2(4). As is well known, these will then be connected to Serving GGSN Support Nodes (SSGN). The service control point 2 essentially operates the Service Control Function (SCF) in known manner.

The prepaid data server 1 is provided with data as to who is a prepaid user and all the relevant policies and other selected information. The GGSNs 3 and 4 are not provided with data which allows them to identify that a particular user is a prepaid user. They receive this information from the prepaid data server.

In embodiments of the invention, it is assumed that a so called charging characteristics parameter (UMTS standards release 99 only) is used to identify that a user is a prepaid user. For support of pre-release 99, and also for customers roaming to networks where the optional charging characteristics parameter is not supported, the GGSN has to query the prepaid data server 1 to determine if a user is a prepaid user.

The prepaid data server is used to enforce policies on the partition of credit limits across GGSNs and to perform other functions. For example, it can deny a set up of a session to a GGSN if a credit limit is exhausted.

The prepaid data server and the SCP2 are closely coupled, thus allowing for voice and data prepaid to co-exist and for the interface between them to be simply based on prepaid application interaction with SCP databases and applications.

A basic outline of messages between a GGSN 3 and the prepaid data server 1 is shown in the following Table 1.

**Table 1**

| | |
|---|---|
| Query messages | Get threshold for prepaid user (as identified by charging characteristics) |
| | Check for prepaid user and send instructions accordingly |
| | |
| Query Response messages | PrePaid user indicator plus allowed threshold for PDP context |
| | Prepaid user indicator plus service denial (no credit available) |
| | Non PrePaid user indicator continue as normal |
| | Non prepaid - reverse charging |
| | |
| Report message | PDP context update (e.g. QoS changes) plus unused credit |
| | Threshold reached |
| | PDP context disconnect plus unused credit |
| | |
| Report Response | New threshold |
| | Refused new threshold - disconnect PDP |

In more detail, some of the various messages and parameters which can be used are as follows:

### GetThreshold(IMSI,MSISDN, APN, QoS parameters)

Used by the GGSN when the charging characteristics indicate that the user is a prepaid user.

### CheckforPrePaidAndGetThreshold (IMSI, MSISDN, APN, QoS parameters)

Used by the GGSN to query the PPS as to whether user is a prepaid user. The PPS will reply either indicating that the user is not a prepaid user (*NoThresholdApplicable*) or will indicate that the user is a prepaid user by returning a threshold for the PDP context (*SetThreshold*)

### SetThreshold (PPS PDPIdentifier, max limit, coefficient time units, coefficient volume units, max volume, time of day trigger)

Used by the PPS to indicate to the threshold applicable for the PDP context. This threshold is represented in units made up of a formula based on time and volume. This formula is based on elapsed connection time and data volume transferred in addition to limits based on a maximum volume and time of day. A formula may be sent to the GGSN in the form of *αT* + β*V ≤ L* where T is time in seconds and V is the volume in bytes and L is the maximum limit the allowed for the PDP context.

### NoThresholdApplicable()

Used by the PPS to indicate to the GGSN that no threshold is applicable for this PDP context.

### FurnishChargingInformation(PPS PDPIdentifier)

Used by the PPS to instruct the GGSN to generate a Charge Detail Record (CDR). This includes charging related information such as details of the party to pay.

### PDPContextUpdate(PPS PDIdentifier, QoS parameters, elapsed time units, total volume transferred, unused units)

Used by the GGSN to inform the PPS that the characteristics of the PDP context (e.g. QoS parameters) have changed. This message will include unused limits in units from the previously set threshold, including elapsed session segment time and the total volume transferred in that session segment.

### PDPThresholdReached(PPS PDPIdentifier)

Used by the GGSN to inform the PPS that the threshold has been reached. This message will include the appropriate threshold reached.

### PDPDisconnected (PPS PDPIdentifier, elapsed time units, total volume transferred, unused units)

Used by the GGSN to inform the PPS that the PDP context has been deactivated (user or network initiated but not as a direct result of a prepaid threshold being reached). This message will include unused limits in units from the previously set threshold, including elapsed session segment time and the total volume transferred in that session segment.

### Disconnect(PPS PDPIdentifier)

Used by the PPS to inform the GGSN to force a disconnect of the PDP context.

### ActivityTest (to check that a session is still in progress)

Used by either the GGSN or the PPS to ensure correct operation.

### ActivityTestAck (asks for an acknowledgement of activity)

Used by either the GGSN or PPS as a response to the Activity Test message.

### KeepAlive

Used to ensure connectivity between the PPS and the GGSN.

### Error Messages

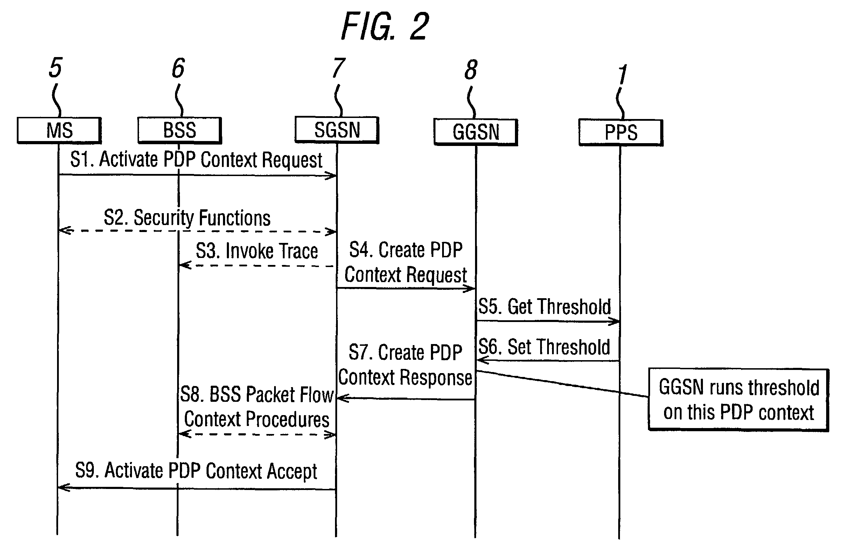

Figures 2 to 6 show in a little more detail signal flow for various scenarios. Figure 2 shows an example of user established PDP context with charging characteristics indicating a prepaid user. The signal flows are shown as being between a mobile station (MS) 5, a base station (BSS) 6, a serving GPRS support node (SGSN) 7, a gateway GPRS support node (GGSN) 8, and the prepaid data server (PPS) 1.

In this scenario, the GGSN examines the charging ID and determines that the user is a prepaid subscriber. It then contacts the prepaid data server. The prepaid data server then replies to the GGSN to indicate that sufficient credit remains to allow the PDP to continue and the PPS sends a threshold that the GGSN must apply to that PDP context.

More particularly, at Step S1, mobile station 5 sends an activate context request to the SGSN 7. After various security functions (S2) the SGSN then sends an invoke trace signal S3 to the base station 6. A cleared PDP context request is then sent from the SGSN to the GGSN and this then requests a threshold from the prepaid data server 1 at Step S5. Then the PPS 1, since it contains details of the user's prepaid status, credit status, etc, sends a threshold at Step S6, which threshold the GGSN must apply to that PDP context (S7). Packet flow context procedures then occur in a normal manner and an activate PDP context accept signal is then transmitted from the SGSN to the mobile station 5.

The threshold may be either time based or volume based or both. A volume based threshold places a time limit that a PDP context session may last, whilst a volume based threshold places a limit on the maximum data that may be transferred between the mobile station and the GGSN.

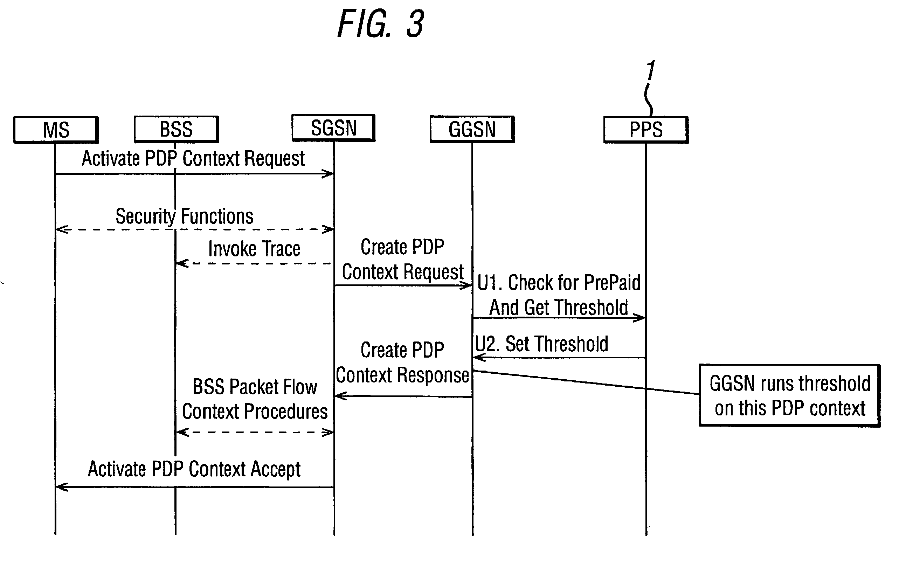

Figure 3 shows an example of prepaid user established PDP context when no information is available to the GGSN about the charging characteristics. The example assumes that the user is a prepaid user. The signal is similar to that of Figure 2 except that the GGSN queries the prepaid data server at a step U1 to check whether the user is a prepaid subscriber. The PPS 1 replies (in this case) with an indication that the user is a prepaid user and also sends a threshold that the GGSN must apply to the PDP context, at Step U2. The remaining steps are similar to that of the flow of Figure 2.

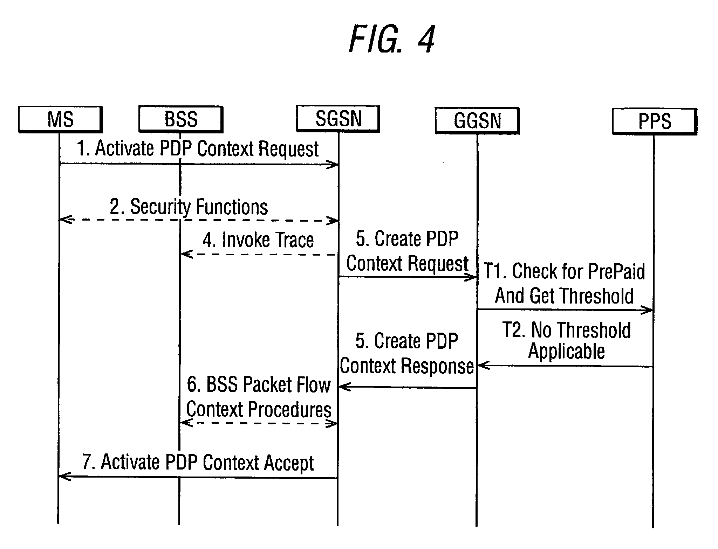

Figure 4 shows an example of post paid user established PDP context with no information available to the GGSN about charging characteristics. In this case, the GGSN has no information in the charging identity (ID) to determine if the user is a prepaid user. The example assumes that the user is not a prepaid user. In this case, the GGSN at Step T1 queries the prepaid data server 1 to determine whether the user is a prepaid subscriber. The prepaid data server replies with an indication that the user is not a prepaid user and so no threshold is applicable. The GGSN then continues to establish PDP context in the normal way and no threshold is applied.

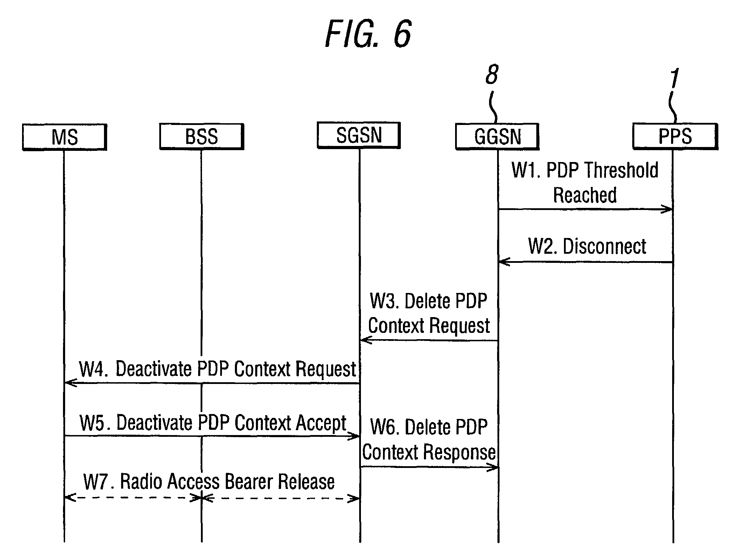

Figure 5 shows an example when a subscriber is a prepaid subscriber and in which a threshold is reached for a particular PDP context, and in which the PDP replies with another threshold.

In this example, during a point in a call, the GGSN reports to the prepaid data server that the previously set threshold (e.g. the threshold referred to with reference to Figure 2 or Figure 3) has been reached. The PPS determines that the user has sufficient credit remaining and so sends a new threshold to the GGSN. These two signals are shown schematically as signals V1 and V2.

Figure 6 shows an example, for a prepaid subscriber, in which, when a call is in progress, a threshold is reached for a particular PDP. In this case, the user has insufficient credit and the PDP requests the release of the PDP context, and thereby termination of a session.

When the GGSN 8 reaches the previously set threshold, it sends a PDP threshold reach signal W1 to the PPS 1. Since the user has insufficient credit the PPS cannot issue a further threshold and so issues a disconnect signal W2 to the GGSN. The GGSN then forwards a delete PDP context request W3 to the SGSN and the respective deactivate PDP context request and deactivate PDP context accept messages flow to and from the mobile station 5, W4 and W5. Further to this, a delete PDP context response is passed from the SGSN to the GGSN and the radio access bearer is released to terminate the session W7.

## Claims

1. A method of enabling a mobile station, associated with a home network, to roam in one or more further networks while using a predetermined service, comprising; providing a node maintaining data relating to said service; providing a set of gateway nodes in the further network which are operated by the home network service provider, and causing the node to interact with the gateway nodes to provide them with data and/or instructions concerning the service.

2. A method as claimed in Claim 1, wherein the service relates to the prepaid status of a subscriber.

3. A method as claimed in Claim 1 or 2, wherein the gateway nodes are Gateway GPRS Support Nodes (GGSN).

4. A method as claimed in Claim 3, wherein the node interacts with service logic in a CSE and GGSN.

5. A method as claimed in Claim 4, wherein the data maintaining node provides the GGSN with thresholds usable to set a limit on the amount of data that can be transferred.

6. A GPRS telecommunications system, comprising a plurality of networks, at least one of the networks being a home network for a subscriber associated with a mobile terminal; a node maintaining data relating to a service; one or more gateway nodes in networks other than the home networks and operated by the home network service provider, and means for enabling said gateway nodes to interact with the service data maintaining node to provide them with data and/or instructions concerning the service.

7. A system as claimed in Claim 6, wherein the gateway nodes are GPRS support nodes.

8. A system as claimed in Claim 7, wherein the node interacts with service logic in a CSE and GGSN.

9. A system as claimed in Claim 8, wherein the data maintaining node provides the GGSN with thresholds usable to set a limit on the amount of data that can be transferred.

10. A GPRS Telecommunications System, including a prepaid data server node.
